# EUROPÄISCHE PATENTSCHRIFT

(11) **EP 1 445 177 B1**
(45) Veröffentlichungstag und Bekanntmachung des Hinweises auf die Patenterteilung: **23.07.2008**
(21) Anmeldenummer: 04002072.9
(22) Anmeldetag: 30.01.2004
(51) Int. Cl.: B62D 25/20

(54) **Kraftfahrzeugkarosserie mit seitlichen Schwellern**
Motor vehicle with lateral sills
Véhicule automobile avec longerons latéraux

(30) Priorität: 04.02.2003 DE 10304307
(43) Veröffentlichungstag der Anmeldung: 11.08.2004
(73) Patentinhaber: Bayerische Motoren Werke Aktiengesellschaft, 80809 München (DE)
(72) Erfinder: Becker, Juergen, 85521 Ottobrunn (DE)

(56) Entgegenhaltungen:
- DE-A- 2 645 163
- DE-A- 4 233 832
- PATENT ABSTRACTS OF JAPAN vol. 016, no. 299 (M-1274), 2. Juli 1992 (1992-07-02) -& JP 04 081371 A (NISSAN MOTOR CO LTD), 16. März 1992 (1992-03-16)
- PATENT ABSTRACTS OF JAPAN vol. 1997, no. 06, 30. Juni 1997 (1997-06-30) -& JP 09 030452 A (NISSAN MOTOR CO LTD), 4. Februar 1997 (1997-02-04)

## Beschreibung

Die Erfindung bezieht sich auf eine Kraftfahrzeugkarosserie mit seitlichen Schwellern der im Oberbegriff des Patentanspruchs 1 genannten Art, welche bereits vielfach, beispielsweise aus der DE 42 33 832 (Fig. 4 und 8) bekannt ist.

Bei der aus dieser Druckschrift bekannten Personenkraftwagenkarosserie soll durch verschiedene Versteifungselemente die Biege- und Torsionssteifigkeit verbessert werden. Dabei haben die aus zwei miteinander verbundenen Längsschalen bestehenden Schweller jeweils eine mittig liegende, lotrechte Längswand. Durch eine in den Hohlraum des Schwellers eingesetzte und mit den beiden Längsschalen verbundene Längswand wird jedoch die Torsionssteifigkeit einer Karosserie nur in begrenztem Maße erhöht.

Ferner geht aus der DE 26 45 163 eine Kraftfahrzeugkarosserie hervor, bei der in den Hohlraum der beiden Schweller mehrere, im Abstand voneinander liegende, sowie lotrecht verlaufende Zwischenwände eingesetzt sind. Diese dienen jedoch nicht zur Verbesserung der Torsions- und Biegesteifigkeit der Karosserie.

Aufgabe der Erfindung ist es daher, eine Kraftfahrzeugkarosserie der im Oberbegriff des Patentanspruchs 1 genannten und aus der JP-A-04-081371 bekannten Art derart auszubilden, dass ihre Torsions- und Biegesteifigkeit durch entsprechende Maßnahmen speziell im Bereich der Schweller erhöht wird.

Zur Lösung der Aufgabe sind die im Patentanspruch 1 dargelegten Merkmale vorgesehen.

Da von der den Schweller in Längsrichtung durchsetzenden Längswand erfindungsgemäß mehrere, im Abstand voneinander angeordnete sowie etwa lotrecht verlaufende Zwischenwände abstehen, die ihrerseits mit dem innen liegenden oder außen liegenden schalenförmigen Längsteil des Schwellers verbunden sind, wird vorteilhafterweise sowohl die Biege- als auch die Torsionssteifigkeit der Karosserie erheblich erhöht. Dabei können die Zwischenwände sehr kostengünstig vorgesehen werden und haben auch ein geringes Gewicht (Merkmale der Patentansprüche 1 und 2).

Falls von der Längswand beidseits Zwischenwände abstehen, die mit den jeweils zugewandten Längsteilen des Schwellers durch Schweißen oder dergleichen verbunden sind, wird die Biege- und Torsionssteifigkeit der Karosserie noch weiter erhöht. Dabei stehen die Zwischenwände etwa rechtwinklig von der Längswand ab und verlaufen in einer gemeinsamen Fluchtlinie. Zur Gewichtsverminderung haben die Zwischenwände jeweils eine oder auch mehrere Durchgangsöffnungen.

Schließlich besteht eine Ausgestaltung der Erfindung darin, dass zumindest eine Reihe von Zwischenwänden vom Bodenbereich des Längsteils zurückgesetzt sind, wobei die Zwischenwände mit dem Boden des Längsteils jeweils über eine Buchse verbunden sind. Von diesen können Verbindungselemente zum Vorder- und/oder Hinterachsträger des Kraftfahrzeugs verlaufen.

Ein Ausführungsbeispiel der Erfindung ist in der Zeichnung dargestellt und wird im Folgenden erläutert. Es zeigt:
- Fig. 1: einen Querschnitt eines Schwellers mit beidseits von der Längswand abstehenden Zwischenwänden,
- Fig. 2: einen Schnitt längs der Linie II-II in Fig. 1,
- Fig. 3: eine abgewandelte Ausführungsform von Fig. 1.

Die nicht dargestellte Karosserie eines Personenkraftwagens hat zwei seitliche Schweller 1, die jeweils aus einem innen liegenden Längsteil 2 und einem außen liegenden Längsteil 3 bestehen, wobei diese jeweils schalenförmig gestaltet und über eine oben liegende Längsnaht 4 und eine unten liegende Längsnaht 5 miteinander verbunden sind. Hierdurch weist der Schweller 1 einen etwa kastenförmigen Querschnitt auf, der einen Hohlraum a umgibt. In diesem befindet sich eine etwa lotrecht verlaufende und sich etwa längs des Schwellers 1 erstreckende Längswand 7, die über ihre beiden Abwinkelungen 7' am Längsteil 3 befestigt ist. Ferner kann die Längswand 7 auch an den Längsnähten 4 und 5 zwischen dem innen liegenden und außen liegenden Längsteil 2 und 3 befestigt sein.

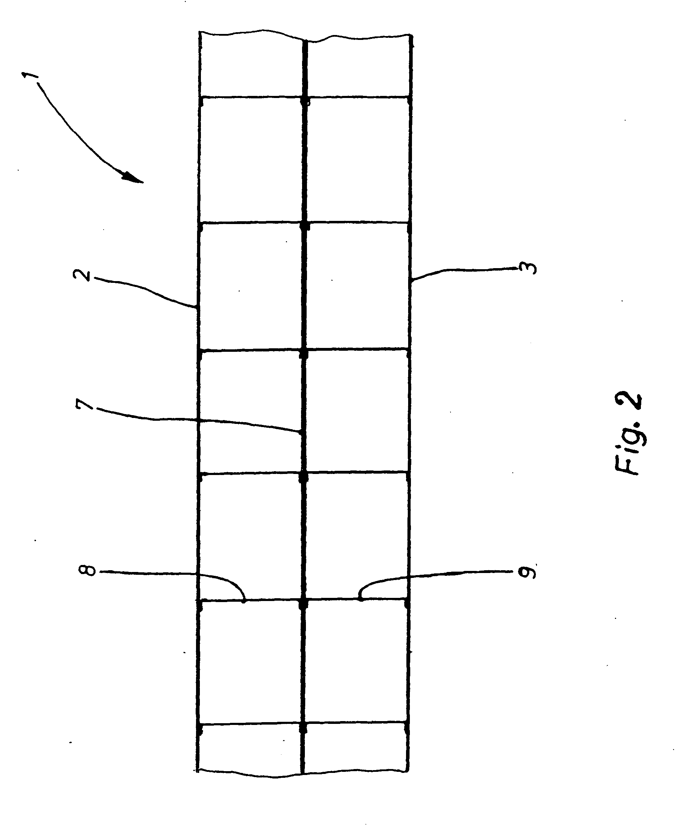

Wie in Fig. 2 ersichtlich, stehen von der Längswand 7 beidseits rechtwinklig mehrere, jeweils in einem Abstand voneinander liegenden Zwischenwände 8 und 9 ab, die lotrecht verlaufen. Dabei sind die Zwischenwände 8 und 9 sowohl mit der Längswand 7 als auch mit den beiden Längsteilen 2 und 3 durch Schweißen oder dergleichen verbunden. Bei dem in Fig. 2 dargestellten Ausführungsbeispiel verlaufen die Zwischenwände 8 und 9 in einer gemeinsamen Fluchtlinie. Darüber hinaus ist es jedoch auch denkbar, dass die Zwischenwände 8 und 9 lagemäßig zueinander versetzt sind. Zur Gewichtserleichterung weisen die Zwischenwände 8 und 9 eine oder zwei Durchgangsöffnungen 10 auf.

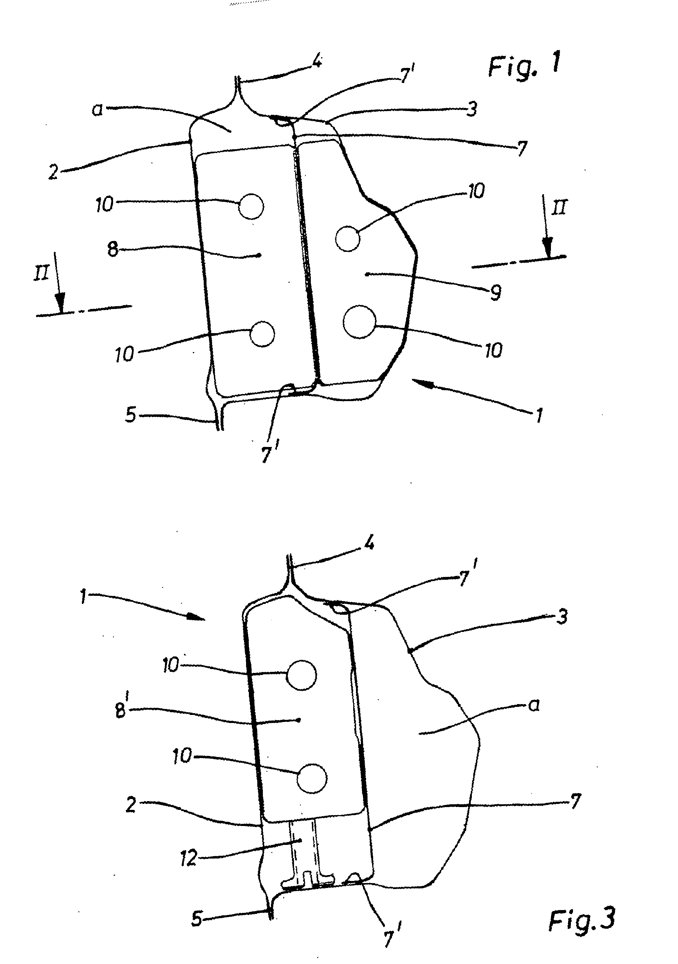

Bei dem in Fig. 3 dargestellten Ausführungsbeispiel sind zwei Zwischenwände 8' - nämlich eine in Fahrtrichtung vorderste und eine hinterste Zwischenwand 8' - vom Bodenbereich des Längsteils 3 zurückgesetzt. Dabei ist an der Unterseite der Zwischenwand 8' jeweils eine Buchse 12 befestigt, die ihrerseits mit dem Boden des Längsteils 3 verbunden ist. Von den Buchsen 12 führt hierbei jeweils ein Verbindungselement zum Vorderachsträger und zum Hinterachsträger.

## Patentansprüche

1. Kraftfahrzeugkarosserie mit seitlichen Schwellern (1), die jeweils einen kastenförmigen, durch miteinander verbundene Längsteile (2, 3) gebildeten Querschnitt aufweisen, zwischen denen sich mindestens eine, zumindest angenähert lotrecht verlaufende Längswand (7) befindet, **dadurch gekennzeichnet, dass** von der Längswand (7) beidseits mehrere, im Abstand voneinander liegende Zwischenwände (8, 8', 9) abstehen, die jeweils mit dem zugewandten Längsteil (2, 3) des Schwellers (1) verbunden sind, und die in einer gemeinsamen Fluchtlinie liegen.

2. Kraftfahrzeugkarosserie nach Anspruch 1, **dadurch gekennzeichnet, dass** die Zwischenwände (8, 8', 9) etwa rechtwinklig von der Längswand (7) abstehen.

3. Kraftfahrzeugkarosserie nach einem der Ansprüche 1 oder 2, **dadurch gekennzeichnet, dass** die Zwischenwände (8, 8', 9) jeweils mindestens eine Durchgangsöffnung (10) aufweisen.

4. Kraftfahrzeugkarosserie nach einem der Ansprüche 1 bis 3, **dadurch gekennzeichnet, dass** die in Fahrtrichtung vorderste und hinterste Zwischenwand (8') des Schwellers (1) vom Bodenbereich des Längsteils (3) zurückgesetzt sind, wobei die Zwischenwände mit dessen Boden über jeweils eine Buchse (12) verbunden sind.

## Claims

1. A vehicle body with lateral sillboards (1) each having a box-like cross-section made up of interconnected longitudinal parts (2, 3) with at least one at least approximately horizontal longitudinal wall (7) between them, **characterised in that** on each side of the longitudinal wall (7) a number of spaced-apart intermediate walls (8, 8', 9) project, each connected to the associated longitudinal part (2, 3) of the sillboard (1) and situated in a common alignment.

2. A vehicle body according to claim 1, **characterised in that** the intermediate walls (8, 8', 9) project approximately at right angles from the longitudinal wall (7).

3. A vehicle body according to claim 1 or claim 2, **characterised in that** the intermediate walls (8, 8', 9) each have at least one passage opening (10).

4. A vehicle body according to any of claims 1 to 3, **characterised in that** the front and rear intermediate wall (8') of the sillboard (1) in the direction of travel are set back from the floor region of the longitudinal part (3), wherein the intermediate walls are connected at the bottom by respective bushes (12).

## Revendications

1. Carrosserie automobile comportant des longerons latéraux (1) ayant chacun une section en forme de caisson et reliés par des pièces longitudinales (2, 3), entre lesquelles il y a une paroi longitudinale (7) au moins sensiblement horizontale,
**caractérisée en ce que**
plusieurs cloisons (8, 8', 9), distantes les unes des autres sont en saillie de part et d'autre de la paroi longitudinale (7), ces cloisons étant reliées à la partie longitudinale (2, 3) en regard du longeron (1) et se situant sur un alignement commun.

2. Carrosserie automobile selon la revendication 1,
**caractérisée en ce que**
les cloisons (8, 8', 9) sont sensiblement perpendiculaires à la paroi longitudinale (7).

3. Carrosserie automobile selon l'une des revendications 1 ou 2,
**caractérisée en ce que**
les cloisons (8, 8', 9) ont chacune au moins un orifice traversant (10).

4. Carrosserie automobile selon l'une des revendications 1 à 3,
**caractérisée en ce que**
la cloison intermédiaire (8') du longeron (1), la plus à l'avant dans la direction de déplacement et celle la plus à l'arrière sont en retrait par rapport à la zone de fond de la pièce longitudinale (3), les cloisons étant reliées chacune à son fond par un manchon (12).
